Europäisches Patentamt

European Patent Office

Office européen des brevets

(11) Publication number: **0 457 437 A2**

# EUROPEAN PATENT APPLICATION

(21) Application number: 91303408.8

(22) Date of filing: 17.04.91

(51) Int. Cl.5: **G06F 13/12**

(30) Priority: 18.05.90 US 525509
18.05.90 US 525510

(43) Date of publication of application:
21.11.91 Bulletin 91/47

(84) Designated Contracting States:
**DE FR GB**

(71) Applicant: **International Business Machines Corporation**
**Old Orchard Road**
**Armonk, N.Y. 10504(US)**

(72) Inventor: **Harper, Jeffrey Douglas**
**1300 Woodlawn Boulevard, No.106**
**Austin, Texas 78703(US)**
Inventor: **Kalandra, Paul William**
**17368 Spring Tree Lane**
**Boca Raton, Florida 33487(US)**
Inventor: **Piazza, William Joseph**
**9742 S.W. 1st Place**
**Boca Raton, Florida 33428(US)**
Inventor: **Tanner, Howard Carl**
**901 Rebbeca Drive**
**Austin, Texas 78758(US)**
Inventor: **Vinh, Anh**
**6004 Cape Coral Drive**
**Austin, Texas 78746(US)**

(74) Representative: **Blakemore, Frederick Norman**
**IBM United Kingdom Limited Intellectual**
**Property Department Hursley Park**
**Winchester Hampshire SO21 2JN(GB)**

(54) **Data processing system having plural adapters connecting plural peripheral devices.**

(57) A register distributed across multiple single port adapters allows the system to operate the single port adapters identically to a single multi-port adapter. Each adapter has its own priority logic identical to the logic used on a multi-port adapter to select an individual port. The priority logic on the adapter allows the system to deselect one adapter and select another adapter in one operation. Each adapter has switch settings to allow selective control of individual bits on the system bus, which allows multiple adapters to respond to the processor simultaneously for different ports in the same manner as a multi-port adapter. By replying simultaneously, the system can use the same software to control two different hardware adapter types: single port, or multi-port.

FIG. 1

Digits 3, 2, 1, and 0 represent the 4 sections of the multiport adapter

This invention relates to a data processing system having means for the selection and control of multiple adapter cards used to connect peripheral devices to the system.

## Background Art

In the early days of personal computer systems, the number of peripheral devices attached to a system tended to be small. The systems typically would include a video display, a printer, a disk drive, and perhaps a modem. To control communication between the processor and the peripheral devices, each device was assigned a specific port address (hereafter, port). Adapter cards (hereafter adapters) were used to interface between the processor and each device, and were typically developed to control a single port.

The processor could select a port by placing the port address on the system bus which connected the processor to the other devices in the system. The adapter, which provided the interface between the device and the system bus, would recognise the address and initiate the action directed by the processor. When the processor switched from one device to another, the original device would be deselected by the processor in one bus write operation and then the new device would be addressed by the processor in a second write operation. Typically, each device was controlled by different software because of the differences in the hardware (e.g., printers and modems would each have unique software).

Over time, processors became more powerful, and were able to control many more devices in a system. As the number of peripheral (I/O) devices on a system grew, a plurality of identical devices were often used on the same system. For example, systems applications developed which used multiple video displays instead of the single displays typically found on early computers. Further, adapter technology improved to the point where multiple video ports could be controlled by a single adapter. One result of the improvement of technology in adapters was the situation where multiple types of adapters were used to control a plurality of identical devices. For example, a system which had a single video display with a single port adapter would be expanded to include several additional displays. The displays may have been added one at a time with each having its own adapter. Likewise, several displays may have been added at the same time with a single multi-port video adapter. Therefore, depending on the rate of growth and the timing of the additions to the system, different types of adapters may be used on the same system to control identical displays.

This creates a problem for the software in at least two respects. First, the software may not be compatible with the two types of adapter hardware which would require two versions of software to control identical I/O devices on the same system. Second, there is a performance impact due to the multiple bus writes required to deselect one device and to select another. The compatibility problem also exists in a multi system environment when one system has a single multi-port adapter and a second system has grown from a single device/single port adapter system to multiple devices each having a single port adapter. In that situation, each system would require different software to control the adapters even though the I/O device configuration may be identical (i.e., four displays on a single multi-port adapter in system A and four identical displays on four single port adapters in system B).

In summary, due to the increase ill the power and complexity of computers, systems have developed performance problems relating to selection and control of the larger number of I/O devices. In addition, software compatibility problems exist due to the difference in adapter types used on the same system or due to differences in adapter types used in a multisystem environment.

According to the present invention there is provided a data processing system having a processor, a system bus operatively connected to the processor, a plurality of peripheral devices, and plural adapters operatively connecting the peripheral devices to the system bus characterised in that interface register means are provided having bit positions to interface with corresponding bit lines of the system bus and the adapters have switch selection means to select the address of each peripheral device and to select bit positions of the interface register means for each peripheral device to correspond to the address thereof.

This specific bus bit lines can be assigned to each of a plurality of single port adapters to correspond with register locations assigned to each port, thereby allowing the simultaneous operating of multiple single port adapters to place the same response on the bus as a single multi-port adapter.

## In the Drawings

Figure 1 shows a sample distributed register configuration according to the invention,

Figure 2 shows a diagram comparing a distributed register used in a multiple single adapter configuration and the corresponding register in a multi-port adapter configuration, and

Figure 3 shows a configuration with two single port adapters.

2

## Description of the Preferred Embodiment

By way of general description, in a computer system with multiple displays, an interface is provided in multi-port adapters which allows the system to activate one display and deactivate another simultaneously. This is accomplished by merely writing to the register. The contents of the register are then used by the adapter to determine which display to deactivate and which display to activate. In like manner, the processor can request status from all of the displays attached to the adapter. Or it can adjust backlighting or contrast for the displays in a single write operation. (In practice, the register can be organised as a single register or as multiple registers. For ease of illustration, it will be treated as a single register herein.) The register in the multi-port adapter enables this single write operation by assigning specific bits in the register to specific display ports.

In a configuration which contains multiple single port adapters, the register is distributed across each of the adapters. By assigning specific bits to each adapter, the processor is able to communicate with multiple single port adapters in the same manner as it communicates with a single multi-port adapter. Each adapter has a switch to indicate which port position it has, which allows it to select the appropriate bits from the bus to place in its register. Also, the switch setting allows each adapter to select the appropriate bus bit lines when replying to the processor. Because the processor is communicating with the displays through a register, and because the processor cannot distinguish the distributed register from the single register on the multi-port card, the processor can communicate with multiple single port adapters in a single operation just as it does with a single multi-port adapter. Therefore, the type of adapter used is transparent to the system software.

Distributing the registers across multiple single port adapters provides better system performance and maintains software compatibility with the multi-port version of the adapter. In other words, on the multi-port adapter, writing to the distributed register allows software to deselect one video port and to select a different video with one write operation because all four video ports are implemented on the same card. But the same capability exists to deselect one port and select another port when using one port cards, even though the operation involves multiple adapter cards.

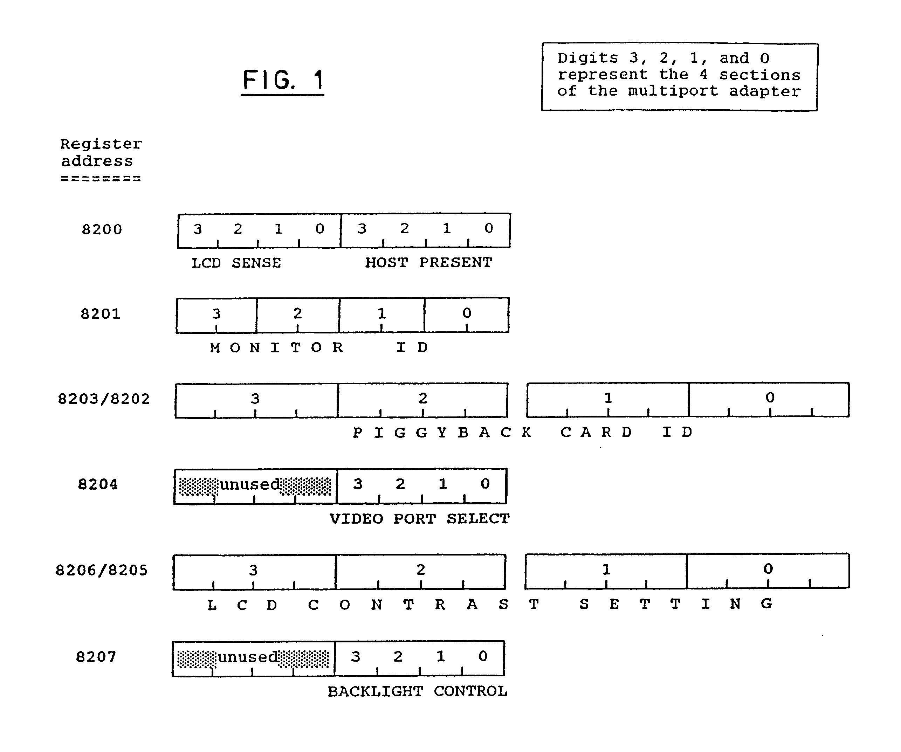

In Figure 1, the register fields are shown. For ease of illustration, the register will be referred to as a distributed register whether it is distributed across several adapters or located on a single multi-port adapter. In either case it will function identically from the perspective of the system. The single and multi-port video adapters contain a set of addressable hardware registers (for illustration, in the range 8200h through 8207h). These registers are unique to these adapters (i.e., they are not found on normal video adapters.) They implement the functions of selecting one of four video "ports" to be active (i.e., addressable for updating), sensing the capabilities of a particular video port, and controlling the backlight and contrast of the LCD panels. In addition, the registers can be expanded to control any of the functions on a display which a processor may control in other systems. The numbers 0, 1, 2, and 3 differentiate between four sets of hardware. The video port select field allows the processor to select the desired display by turning on the appropriate bit. For example, the processor can select port 2 and then read the video memory from that port. Control fields for other activity can also be provided. As an example, sophisticated adapters often use piggyback, or daughter, cards to hold additional logic. The piggyback card ID field allows the processor to select and control these daughter cards as well.

As a further example, reading register 8207h on the multi-port adapter allows software to determine which backlights are currently turned on and which are not. On the multi-port adapter, this read operation simply involves gating the four signals to the system bus at the appropriate time, because all four backlights are controlled by this one adapter and therefore they are all available to be gated through a single circuit. However, reading register 8207h will produce the same results when one or more single port video adapters are in the system. In this case, each adapter individually gates only one bit of data onto the system bus, thus providing the response for the video port which it controls. Nonetheless, the system sees the response from all installed video ports simultaneously. The registers are therefore distributed across multiple adapters.

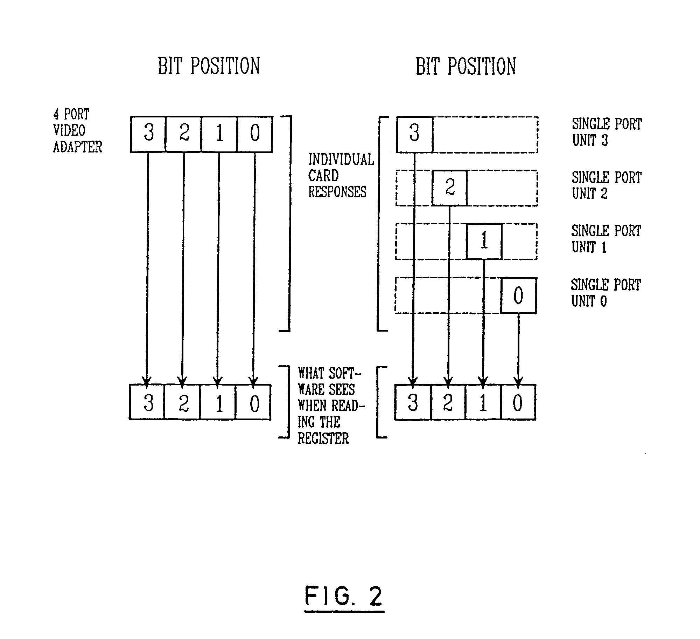

In Figure 2, bus bit line attachment of a distributed register configuration and a multi-port configuration are illustrated. In the multi-port configuration, the adapter presents information and accepts commands for four displays (0-3) simultaneously. In the distributed configuration, each adapter controls a particular bit for the port address of the display it controls. Since each adapter can write to its particular bus bit line simultaneously with the other adapters, the four distributed adapters (0-3) can appear to the system identically to the multi-port adapter when the system reads or writes to the bus.

Each single port adapter has priority selection means (not shown) identical to that on multi-port adapters. Priority selection of adapters is well known in the art. Further each port has means to activate a single bit line on the bus simultaneously with other single port adapters each of which addresses a different bit line. The priority selection means recognises the highest priority address to be used and activates its port if that address is assigned to its port or deactivates its port if a higher priority address assigned to a different port is selected. Therefore, the system is protected from physical damage in the event that the activation of more than one non-distributed register is attempted. The assignment of specific bus bit lines to each of the single port adapters which correspond with register locations assigned to each port allows the simultaneous response of multiple single port adapters to place the same response on the bus as a single multi-port adapter.

Note that a priority encoding circuit is contained on the multi-port video adapter so that only one of the four video ports will be selected if more than one bit is accidentally turned on when writing to register 8204h. The same priority encoding scheme also works when more than one single port video adapter is installed, because each adapter applies the same priority encoding algorithm (in hardware) to determine which is the highest priority port being selected. If this selected port matches the adapter's own unit number it considers itself in control of the bus, otherwise it remains inactive.

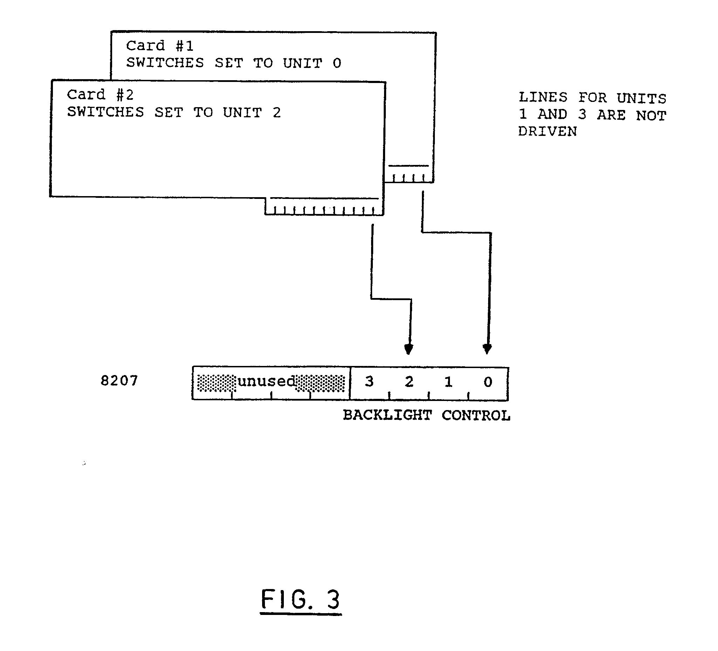

In Figure 3, a configuration showing two single port adapters is shown. The adapter switches were arbitrarily chosen to select port addresses 0 and 2. A system can be gradually enlarged, as needed, from one to four adapters.

This invention improves performance and ease of programming by allowing the same set of functions (selecting and deselecting video ports, controlling backlights, etc.) to be accomplished with fewer operations to the hardware. In addition, it improves software compatibility. Applications written for a system based on a single video display (such as an application written for a traditional single display system) can be easily transported to a system having multiple video displays. Traditional approaches used in the past to address the problems associated with having more than one of the same hardware function available within the system have been to provide each set of hardware with its own unique address (which uses up available address space quicker and has more impacts to software), and to provide a register within the system which completely disables one set of hardware and enables another, but does not allow for simultaneous control of both (this has a performance penalty associated with it).

Turning now to the specific case where a display device is a liquid crystal device (LCD), it is important to have the contrast and backlight properly adjusted to enable a user to read the LCD display screen comfortably. However, in commercial settings terminals may be unattended for long periods of time. This is disadvantageous because the useful life of the display is a function of backlight use. For example, the mean time between failure (MTBF) of the LCD screen is greater than that of a CRT display, but the MTBF of the backlight is less than that of a CRT display. Therefore, the ability to control usage of the backlight directly affects the relative reliability of an LCD display in relation to a CRT display.

The following definitions are well known in the personal computer art:

1. BIOS - Basic Input Output Subsystem - a set of assembly language programs residing in EPROM on the system board or option adapter cards. BIOS provides an interface between hardware functions and the operating system and application programs.

2. POST - Power On Self Test - a set of assembly language programs residing in EPROM on the system board or option adapter cards. POST routines execute whenever the system is turned on or restarted and they verify the proper operation of the hardware and initialise devices as required.

3. BIOS Data Area - an area of RAM memory used by BIOS to store the status of various devices which it controls. On IBM PC compatible machines, the BIOS data area consists of the 256 bytes of memory starting at absolute address 400h.

4. Extended BIOS Data Area - an extension to the BIOS Data Area. The Extended BIOS Data Area starts out as the top 1K bytes of memory in IBM PC Compatibles and can be expanded if necessary. A large portion of this data area is dynamically allocated to whatever installed device needs it and is quite frequently unused.

5. NMI - Non Maskable Interrupt - an interrupt which cannot be disabled using the standard methods of masking interrupts (i.e., the CLI instruction or by changing the Interrupt Mask Register in the interrupt controller chip.)

6. BBSRAM - Battery Backed Static RAM - a special area of memory which is nonvolatile because it is kept powered by a battery when the system power supply is off.

The control of LCD backlight and contrast can be accomplished with a single BIOS call. In addition, switching between LCD displays in a system with multiple displays can also be accomplished with a single BIOS call. The advantage is that the controlling software is more efficient, therefore having better performance. In addition, functions such as backlight control are easier to implement in software, which results in a greater probability that they will be used to increase LCD display MTBF.

The same backlight and contrast BIOS calls work on all video ports regardless of whether the controlling hardware resides on the system board or a single or multiport video adapter. The backlights can be forced to turn themselves off after a preset time interval (this is important for extending the useful life of the backlights). They can be turned back on and reset to turn off automatically again with a single BIOS call.

The following is an overview of how each of the major functional enhancements to the video subsystem are implemented:

1. Contrast control, backlight control, and display sensing.

Contrast and backlight control registers and display sense registers are located at different addresses for the video ports available within the system. BIOS will make a determination as to which video port is currently selected and automatically select the proper registers to use. This simplifies the calling procedure.

2. Backlight "auto-off" function.

Application software can specify that the backlights should turn off automatically after a certain period of time so that the life of the backlights will be prolonged by not using it during periods of inactivity. The application can then make calls to the 'backlight on' function of BIOS whenever system activity requiring the backlight is detected. This call will turn a backlight on if it is off and will reset the timeout if the backlight is already on.

The implementation of the 'auto-off' feature is as follows:

(a) A COUNTER and TIMEOUT VALUE are stored in the Extended BIOS Data Area for each of the 5 video ports. If the COUNTER and TIMEOUT VALUE are set to 0, the auto-off feature is not being used.

(b) To start the auto-off feature, an application makes a BIOS call that sets the TIMEOUT VALUE to a non-zero value and performs the 'backlight on' function.

(c) Whenever the 'backlight on' BIOS call is made, BIOS turns the backlight on and copies the TIMEOUT VALUE to the COUNTER.

(d) The COUNTER is decremented by the NMI handler once every 10 milliseconds. When the COUNTER reaches 0, the backlight is turned off.

(e) To stop the auto-off feature, an application makes a BIOS call that sets the TIMEOUT VALUE to 0.

3. Default contrast setting.

During power on, POST will retrieve a default contrast setting from the Battery Backed Static RAM (BBSRAM) if BBSRAM has been initialised. If BBSRAM has not been initialised, a value stored in the EPROM is used.

A utility program under the "setup" portion of the diagnostics allows the user to set the default value into BBSRAM.

4. Video switching.

Video switching begins during POST. Five data areas of slightly less than 64 bytes each are allocated in the Extended BIOS data area. Four data areas are provided for adapter ports and one data area is provided for a video port on the system board. As each video port is tested and initialised, POST saves certain key interrupt vectors and portions of the BIOS data area by copying them into the Extended BIOS Data Area before initialising the next video port. For example, the system board video is enabled and initialised, then the vectors and BIOS data are saved in the Extended BIOS Data Area before moving on to initialise the I/O channel video adapters. Each of the 5 video ports in the system has its own buffer in the Extended BIOS Data Area.

Whenever an application program requests switching to a different video port, BIOS takes the following actions automatically:

(a) Interrupt vectors and BIOS Data Area parameters related to video are copied to the Extended BIOS Data Area in a block reserved specifically for the currently selected video port.

(b) Hardware registers are changed to cause the deselection of one port and the selection of another.

(c) Interrupt vectors and BIOS Data Area parameters related to video are copied from the BIOS Data Area (from the block reserved specifically for the newly selected video port).

A specific implementation of the preferred embodiment is shown in the following detailed description of the BIOS functions (the use of BIOS and BIOS functions are well known in the art) used to implement this invention:

The following gives the details of portions of the BIOS interface under INT 15h (System Services) which have been created to access the extensions described in this herein.

INT 15H (SYSTEM SERVICES)
AH=0D0H TERMINAL SPECIFIC FEATURES
AL=03H EXTERNAL CRT SENSE
ON RETURN:

```
        AL = STATUS:
            BITS 7-2 = 0
            BITS 1-0 = EXT CRT SENSE BITS
                ECS BITS

                1   0           MEAN
                ---------       ----------------
                1   1           LCD (NO EXT CRT)
                1   0           31KHZ COLOUR DISPLAY
                0   1           31KHZ MONOCHROME DISPLAY
                0   0           15KHZ COLOUR CRT
```

NOTE:      THIS CALL ALWAYS WORKS WITH THE CURRENTLY SELECTED
VIDEO PORT.


AL=05H LCD DISPLAY CONTRAST AND BACKLIGHT CONTROL

BH=00H     SET OPERATOR DISPLAY CONTRAST LEVEL TO BL ( 0<= BL <= OF) (SETTING BL TO ZERO TURNS THE VOLTAGE TO THE LCD PANEL OFF)

NOTE:      THIS CALL ALWAYS WORKS WITH THE CURRENTLY SELECTED
VIDEO PORT.

BH=01H     ASSIGN 'CONTRAST UP' FUNCTION TO KEY BL

BH=02H     ASSIGN 'CONTRAST DOWN' FUNCTION TO KEY BL (WHEN ENABLED, THE CORRESPONDING KEY ON THE KEYBOARD IS USED TO INCREASE OR DECREASE THE OPERATOR DISPLAY CONTRAST.  THE KEY MAY NOT BE USED FOR ANY OTHER PURPOSE AND WILL NOT RESULT IN A SCAN CODE BEING PASSED TO THE     APPLICATION. BOTH UP AND DOWN FUNCTIONS DO NOT HAVE TO BE ASSIGNED SINCE THE KEYS CONTRAST VALUES WILL 'WRAP'.  TO DISABLE THIS FEATURE, SELECT KEY 00 FOR BOTH FUNCTIONS, WHICH IS THE DEFAULT.)

BH=03H      OPERATOR DISPLAY BACKLIGHT

NOTE:      THESE CALLS ALWAYS WORK WITH THE CURRENTLY SELECTED
VIDEO PORT.


BL=00H      BACKLIGHT OFF

BL=01H      BACKLIGHT ON

BL=02H      BACKLIGHT ON, AUTO-OFF IN CX SECONDS

IF CX=0000, AUTO-OFF FUNCTION IS DISABLED AND

THE BACKLIGHT WILL REMAIN ON.

BL=03H      STATUS

ON RETURN:

AL=BACKLIGHT STATUS

BITS 7-2 = 0

BIT 1 = 1 IF BACKLIGHT IS IN AUTO-OFF MODE

(CX WILL RETURN TIMEOUT VALUE IN SECONDS)

BIT 0 = 1 IF BACKLIGHT IS CURRENTLY ON


NOTES:      1)   WHEN OPERATING IN AUTO-OFF MODE, THE "ON"
COMMAND WILL TURN THE DISPLAY ON AND RESTART THE TIMER.
THE DISPLAY WILL THEN TURN OFF AGAIN AFTER THE SPECIFIED
TIME INTERVAL UNLESS A KEY IS PRESSED ON THE MEMBRANE
KEYBOARD.


2)   TO COMPLETELY DISABLE THE AUTO-OFF FUNCTION AND
ALLOW SIMPLE CONTROL USING THE ON AND OFF COMMANDS,
CALL AUTO OFF (BL=02H) WITH CX SET TO 0.   (THIS TURNS
THE DISPLAY ON AND CANCELS AUTO-OFF)   THEN USE THE
NORMAL OFF CALL.

3)   WHEN IN AUTO-OFF MODE, THE BACKLIGHT WILL TURN ON (IF IT IS OFF) WHEN A KEY IS PRESSED ON THE KEYBOARD AND THE KEYSTROKE WILL BE THROWN AWAY.

4)   ON TOUCHSCREEN UNITS, TOUCHSCREEN ACTIVITY WILL NOT TURN THE BACKLIGHT BACK ON.  TOUCHSCREEN DEVICE DRIVERS OR APPLICATION PROGRAMS HANDLING TOUCHSCREENS SHOULD INCLUDE A CALL TO TURN THE BACKLIGHT ON WHENEVER TOUCHSCREEN ACTIVITY IS DETECTED.

```
AL=0AH VIDEO PORT SELECTION
      BH=00H SELECT VIDEO PORT
            BL=00H PORT 0 (SYSTEM BOARD)
            BL=01H PORT 1 (ADAPTER)
            BL=02H PORT 2 (ADAPTER)
            BL=03H PORT 3 (ADAPTER)
            BL=04H PORT 4 (ADAPTER)
      ON RETURN:
            ZF=1 MEANS REQUESTED PORT DOES NOT EXIST (THE
                  HARDWARE REGISTERS WILL STILL BE SET TO SELECT
                  THE NON-EXISTENT PORT)
            ZF=0 MEANS REQUESTED PORT EXISTS
      (IF THE MOST SIGNIFICANT BIT OF BL IS SET WHEN THIS CALL
      IS MADE, THE SPECIFIED VIDEO PORT WILL BE SELECTED AND IT
      WILL ALSO BE RESET TO BIOS VIDEO MODE 3 USING A BIOS INT
      10H AX=0003H CALL.)
```

THIS CALL CHANGES ALLOWS THE SELECTION OF ANY VIDEO PORT (WHETHER IT IS ON THE SYSTEM BOARD OR THE SINGLE OR MULTIPORT VGA CARD) BY PERFORMING THE FOLLOWING FUNCTIONS:

1)  BIOS DATA AREAS AND INTERRUPT VECTORS FOR THE
    CURRENTLY SELECTED VIDEO PORT ARE SAVED IN THE
    EXTENDED BIOS DATA AREA (A UNIQUE AREA FOR EACH
    VIDEO PORT)

2)  HARDWARE REGISTERS ARE CHANGED TO SELECT THE
    REQUESTED VIDEO PORT

3)  BIOS DATA AREAS AND INTERRUPT VECTORS ASSOCIATED
    WITH THE NEWLY SELECTED VIDEO PORT ARE RESTORED
    FROM THE EXTENDED BIOS DATA AREA

BH=01H    RESERVED FOR POST/BIOS (SAVE PORT DATA AREA)
BH=02H    RESERVED FOR POST/BIOS (RESTORE PORT DATA AREA)
BH=03H    QUERY CURRENT VIDEO PORT RETURNS CURRENTLY SELECTED
          VIDEO PORT NUMBER IN AL (0 TO 4).

On return from all AH=0D0H calls:
    All registers preserved except AX (unless otherwise noted)
    If AH=86 and CY=1, invalid function or subfunction was
    given

While this invention has been described in terms of a preferred embodiment, those skilled in the art will recognise many variations which can be made. For example, a four port multi-port adapter was used for illustrative purposes, but the number of ports and corresponding number of single port adapters on the distributed register can be varied. In addition, the types of display operations shown, such as backlight, and contrast control, could be expanded to other display functions. The address switching means could be accomplished by common hardware switches or, for example, eproms. Bus bit line selection logic and device priority logic could be implemented in hardware or software on the adapter.

**Claims**

1. A data processing system having a processor, a system bus operatively connected to the processor, a plurality of peripheral devices, and plural adapters operatively connecting the peripheral devices to the system bus characterised in that interface register means are provided having bit positions to interface with corresponding bit lines of the system bus and the adapters have switch selection means to select the address of each peripheral device and to select bit positions of the interface register means for each peripheral device to correspond to the address thereof.

2. A system according to claim 1 wherein the interface register means are constituted as a plurality of registers.

3. A system according to claim 1 wherein the interface register means are constituted as a single register.

4. A system according to any one of claims 1 to 3 wherein priority selection means are provided to assign priorities to the adapters for communication with the interface register means.

5. A system according to any one of claims 1 to 4 wherein the peripheral devices are displays and the interface register means has bit locations to store display status and command information.

6. A system according to claim 5 wherein the interface register means has bit locations to store display contrast control information.

7. A system according to claim 5 or 6 wherein the interface register means has bit locations to store display backlight control information.

8. A system according to claim 5, 6 or 7 wherein a BIOS program is operable to transfer information to the interface register means.

FIG. 1

Digits 3, 2, 1, and 0 represent the 4 sections of the multiport adapter

Register address
========

8200 — LCD SENSE    HOST PRESENT

8201 — MONITOR ID

8203/8202 — PIGGYBACK CARD ID

8204 — VIDEO PORT SELECT

8206/8205 — LCD CONTRAST SETTING

8207 — BACKLIGHT CONTROL

FIG. 2

Card #1
SWITCHES SET TO UNIT 0

Card #2
SWITCHES SET TO UNIT 2

LINES FOR UNITS
1 AND 3 ARE NOT
DRIVEN

8207

| unused | 3 | 2 | 1 | 0 |

BACKLIGHT CONTROL

FIG. 3

14